# EUROPÄISCHE PATENTSCHRIFT

(11) **EP 0 979 770 B1**
(45) Veröffentlichungstag und Bekanntmachung des Hinweises auf die Patenterteilung: **07.12.2005**
(21) Anmeldenummer: 99114779.4
(22) Anmeldetag: 28.07.1999
(51) Int. Cl.: B62D 65/00

(54) **Vorrichtung zur Nachbildung zumindest eines Teilbereichs einer Fahrzeugkarosserie**
Method for reproducing at least a part of a vehicle body
Procédé pour la reproduction d'au moins une partie d' une carrosserie de véhicule

(30) Priorität: 10.08.1998 DE 19836016
(43) Veröffentlichungstag der Anmeldung: 16.02.2000
(73) Patentinhaber: Bayerische Motoren Werke Aktiengesellschaft, 80788 München (DE)
(72) Erfinder: Treptow, Norbert, 85305 Jetzendorf (DE); Hasberg, Hubert, 81241 München (DE); Berthold, Klaus, 85521 Ottobrunn (DE); Stempfhuber, Peter, 93359 Wildenberg (DE)

(56) Entgegenhaltungen:
- DE-A- 4 311 647
- DE-A- 4 408 038
- DE-A- 19 620 465
- US-A- 5 231 749

## Beschreibung

Die Erfindung betrifft eine Vorrichtung zur Nachbildung zumindest eines Teilbereiches einer Fahrzeugkarosserie zum Zweck der Abstimmung von Fahrzeugteilen, wie sie beispielsweise aus der DE 43 11 647 C2 bekannt ist. Derartige Vorrichtungen werden auch als Cubing-Aufbauten bezeichnet.

Die DE 43 11 647 A1 offenbart eine Vorrichtung, mit einer Mehrzahl steifer Rahmenteile, an deren Innenseiten zum Zweck des Innencubings Ausstattungsteile angeordnet sind.

Des weiteren ist aus der US 5,231,749 A eine Vorrichtung zur Verifizierung eines Designmodells bekannt, wobei an einer inneren Struktur Referenzteile von Außenhautbauteile der Fahrzeugkarrosserie angeordnet sind. Hierzu stellt die Vorrichtung zweidimensionale Anlageflächen für Modelle von Innen- und Außenbauteilen zur Verfügung. Die ebenen Auflageflächen stellen sicher, dass die Benchmark-Ebenen der Modelle in einem rechtwinkeligen Koordinatensystem eingehalten werden.

Aufgabe der Erfindung ist es, die bekannten Vorrichtungen weiterzubilden.

Diese Aufgabe wird durch die Merkmale der Ansprüche 1 oder 14 gelöst.

Kerngedanke gemäß Anspruch 1 ist es, die innere Struktur einer Fahrzeugkarosserie mit hoher Maßgenauigkeit nachzubilden sowie Referenzteile von Außenhautbauteilen vorzusehen, die die Außenhautbauteile der Fahrzeugkarosserie mit hoher Maßgenauigkeit nachbilden. Im Unterschied zu bekannten Aufbauten ist kein separates inneres Traggerüst vorgesehen; vielmehr ist auch die innere Struktur zumindest in Teilbereichen der Blechstruktur der Fahrzeugkarosserie unmittelbar nachgebildet. Damit die Referenzteile über einen langen Zeitraum ihre Maß- und Formgenauigkeit beibehalten, sind sie gemäß der Erfindung aus einem metallischen Werkstoff gefertigt. Die Referenzteile können zumindest teilweise von der inneren Struktur abgenommen und gegen abzustimmende Außenhautbauteile ausgetauscht werden. Somit können einzelne Referenzteile durch Modelle (Musterteile) oder serienfallende Teile ersetzt werden, wobei die benachbarten Referenzteile eine exakte Beurteilung des Fugenbildes und der Übergänge ermöglichen. Bewegbare Außenhautbauteile (Türen, Klappen etc.) sind über dem Serienstand entsprechende Scharniere an die Vorrichtung angebunden. Außerdem können an die Referenzteile zu überprüfende Bauteile des Fahrzeug-Exterieurs (z. B. Stoßfänger, Scheinwerfer, Leuchten, Zierleisten etc.) angebaut werden.

Die erfindungsgemäße Vorrichtung, die in ihrem äußeren Erscheinungsbild - abgesehen vom verwendeten Werkstoff - einem Stylingmodell des Fahrzeugs aus Ton ähnelt, eignet sich in besonders vorteilhafter Weise zur Qualitätskontrolle im Vorfeld und während des Serienanlaufs eines neuen Fahrzeugmodells. Die Vorrichtung steht unabhängig von der Verfügbarkeit einer Prototypen-Rohkarosserie bzw. ohne Rückgriff auf Serien-Rohkarosserien zur Qualitätskontrolle zur Verfügung. Sie kann des weiteren in vorteilhafter Weise zur Prüfung der Maß- und Formhaltigkeit von Fahrzeugteilen während des gesamten Produktionszeitraums des Fahrzeugs eingesetzt werden, indem für den freigegebenen Serienstand fertigungsnah eine Referenz (Konstruktions-Sollstand) zur Verfügung steht, an der Änderungen des Serienstandes durch den Austausch der jeweilig geänderten Komponenten problemlos dargestellt werden können. Durch Bereitstellung eines derartigen, jeweils aktualisierten Cubingmodelles wird eine Referenz geschaffen, die die Qualitätssicherung in der Serienfertigung erleichtert. Besonders sinnvoll ist es dabei, bestimmte Teilumfänge der Karosserie (Vorderbau, Heckbereich etc.) in eigenen Vorrichtungen darzustellen und den jeweiligen Produktionsbereichen oder den jeweiligen Zulieferern zum Zwecke der Qualitätskontrolle zu überlassen.

Gemäß Anspruch 2 werden auch Referenzteile von Ausstattungsteilen des Fahrzeuges, die bislang aus Modellmaterial (z. B. "Ureol" der Fa. Ciba Geigy) oder aus Kohlefaser hergestellt werden, aus einem metallischen Werkstoff gefertigt. Damit wird auch bei solchen Referenzteilen von Ausstattungsteilen, die über einen längeren Zeitraum (beispielsweise über den gesamten Produktionszeitraum eines Fahrzeuges) als Referenz dienen, eine gleichbleibend hohe Maß- und Formgenauigkeit erzielt. Der Begriff "Ausstattungsteil" umfaßt alle an der Rohkarosserie anbringbare Ein- und Anbauteile, vor allem im Innenbereich des Fahrzeuges. Damit kann durch den Einbau eines Ein- oder Anbauteils in eine Umgebung, die von Referenzteilen gebildet wird, ohne Einsatz von Meßeinrichtungen eine Prüfung der Maßhaltigkeit vorgenommen werden.

Die Komponenten der Referenzteile der Außenhautbauteile bzw. der Referenzteile von Ausstattungsteilen bestehen gemäß Anspruch 3 aus einem Leichtmetallwerkstoff. Die einzelnen Komponenten werden durch spanende Bearbeitung, beispielsweise durch Fräsen auf der Basis von CAD-Daten, mit hoher Maßgenauigkeit hergestellt. Bevorzugtes Material der Komponenten sind Aluminiumguß- oder Walzlegierungen, die sich leicht bearbeiten lassen und sich durch ein geringes Gewicht bei ausreichenden Festigkeits- und Steifigkeitseigenschaften auszeichnen.

Gemäß Anspruch 4 sind die Referenzteile der Außenhautbauteile einzeln von der inneren Struktur und benachbarten Referenzteilen abnehmbar, wobei die Befestigung der Referenzteile so gestaltet ist, daß eine Demontage weiterer Referenzteile oder anderer Komponenten der inneren Struktur im Regelfall nicht erforderlich ist. Hierzu sind die Trennebenen zwischen den einzelnen Bauteilen entsprechend zu wählen und zu gestalten.

Neben dem Einsatz der Vorrichtung für die Zwecke des Außencubings kann die erfindungsgemäße Vorrichtung gemäß Anspruch 5 auch für das Innencubing in besonders vorteilhafter Weise genutzt werden. Insbesondere kann ein "erweitertes Innencubing" durchgeführt werden, indem auch Freiräume und Hohlräume der Rohkarosserie an der erfindungsgemäßen Vorrichtung nachgebildet werden. Damit kann im Sinn eines Einbauversuches simuliert werden, ob für bestimmte Ausstattungsteile des Fahrzeugs ein ausreichender Einbauraum besteht. Beispiele hierfür sind Hohlräume in einer B-Säule (z. B. für einen Gurtaufroller), in der Hutablage (z. B. für Lautsprecher, Zwangsentlüftung, Gurtaufroller etc.) sowie im Bereich von Schweller, Radhaus und Stirnwand (z. B. für Steuergeräte, Tüllen für die Durchführung von Leitungen etc.). Auch kann die Unterbringung beispielsweise von Kabelbäumen und von Kanälen für die Heizungs- oder Klimaanlage in Freiräumen der nachgebildeten Karosserie untersucht werden. Auch ist es möglich, den Einbau größerer oder komplexerer Systeme (z. B. Instrumententafel, Sitz, Airbagsystem, Durchladeeinrichtung zwischen Fahrgast- und Gepäckraum etc.) zu simulieren. Daneben können auch Freigängigkeitsversuche an bewegten Bauteilen, wie beispielsweise Fensterhebern, Schiebedächern, Schließsystemen etc. durchgeführt werden.

Somit kann eine einzige Vorrichtung sowohl zum Zwecke des Innen- als auch des Außencubing eingesetzt werden, mit der Möglichkeit von Einbauuntersuchungen an unterschiedlichsten Bauteilen des Interieurs und Exterieurs. Mit der erfindungsgemäßen Vorrichtung steht ein komplettes Aluminium-Modell eines Fahrzeuges oder eines Fahrzeugabschnittes zur Verfügung, das eine Gesamtbetrachtung des Zusammenwirkens verschiedenster Ein- und Anbauteile ermöglicht. Durch die Beweglichkeit einzelner Komponenten (Türen, Klappen) ist beispielsweise eine Beurteilung der Funktion und der optischen Wirkung des Interieurs bei geöffneter Tür möglich.

Gemäß Anspruch 6 sind an einzelnen Komponenten der Vorrichtung Funktionsflächen für Ausstattungsteile vorgesehen. Maßgenaue Anlageflächen dienen Anbau- oder Einbauversuchen beispielsweise von Schließsystemen für Türen und Klappen. Flansche sind insbesondere für das Aufstecken von Kantenschutz- und Dichtprofilen geeignet. An Referenzteilen der äußeren Struktur (Außenhautbauteile) können Verkleidungselemente, Zierleisten, Firmenembleme, Abdeckungen für Regenleisten, Stoßfänger, Scheinwerfer, Leuchten, Windschutzscheiben etc. angebracht werden.

Insbesondere für das Aufstecken von Kantenschutz- und Dichtprofilen ist gemäß Anspruch 7 vorgesehen, randseitige Bereiche geringer Wandstärke mit einem Einsatz aus einem Material entsprechend hoher Festigkeit (z. B. Federstahl) zu versehen, um auch in diesem Bereich eine originalgetreue und belastbare Nachbildung der Karosserie zu erreichen. Dies ist in Einzelfällen aufgrund der Materialeigenschaften der bevorzugt verwendeten Aluminiumlegierungen einstückig nicht möglich.

Bei der Ausgestaltung der Erfindung nach Anspruch 8 sind die Außenhautbauteile (das heißt Referenzteile, Musterteile oder serienfallende Außenhautbauteile) ebenso wie die fahrzeuginnenseitigen Bauteile (das heißt Referenzteile gemäß Anspruch 2, konventionelle Musterteile oder serienfallende Bauteile) an die Vorrichtung über Befestigungseinrichtungen angebunden, die in Netzlage der serienmäßigen Befestigung angeordnet sind. Durch diese Ausgestaltung der Vorrichtung wird die serienmäßige Befestigungssituation nachgebildet. Hierfür weisen Komponenten der Vorrichtung (z. B. Türinnenblech, Vorderwand etc.) Befestigungseinrichtungen für die Außenhautbauteile (z. B. Türaußenhaut) bzw. fahrzeugäußere Ausstattungsteile (z. B. Scheinwerfer) auf. Auch Scharniere fallen im weiteren Sinne unter den Begriff der Befestigungseinrichtungen. Ferner sind an der Innenseite der äußeren Struktur (z. B. Säulen, Fensterrahmen, Dach etc.) und/oder an der inneren Struktur Befestigungseinrichtungen für fahrzeuginnenseitige Bauteile, wie Verkleidungsteile, Gurtaufroller, Steuergeräte etc. vorgesehen.

Die Befestigungseinrichtungen weisen bevorzugt austauschbare Einsätze auf (Anspruch 9). Hierdurch ist bei Beschädigung oder Zerstörung einer Befestigungseinrichtung ein problemloser Austausch der Befestigungseinrichtung möglich. Die Befestigungseinrichtungen können für Schraub- und/oder Clipsbefestigung der Bauteile (Anspruch 10) ausgelegt sein. Somit kann eine der Serienbefestigung entsprechende Befestigungsart bereits am Cubing-Aufbau vorgenommen werden.

Die Befestigungseinrichtungen können an Komponenten der inneren oder der äußeren Struktur vorgesehen sein und dienen der Befestigung von Ausstattungsteilen aller Art wie z. B Verkleidungsteilen, elektrischen, pneumatischen oder hydraulischen Leitungen, Steuergeräten, elektromotorischen Stelleinheiten etc.. Die Befestigungseinrichtungen werden beispielsweise von Gewindeeinsätzen, Clipsaufnahmen, Schweiß- oder Gewindebolzen, Befestigungswinkeln, Paßstiften etc. gebildet. Insbesondere Schweißbolzen, vor allem Bodenbereich, können im Cubing-Aufbau deutlich einfacher gesetzt und gegeneinander ausgetauscht werden, als dies bei einer Rohkarosserie der Fall ist.

In Weiterbildung der Erfindung ist gemäß Anspruch 11 vorgesehen, insbesondere an Referenzteilen der Außenhaut flächige Aussparungen vorzusehen, um hierdurch ein "Fenster" zur Betrachtung von Vorgängen im Inneren des Referenzbauteiles zu schaffen. Hiermit können Bewegungsabläufe beispielsweise im Inneren einer Tür bei Versenken der Seitenscheibe beobachtet werden. Auch Bewegungsvorgänge an Schließsystemen von Türen oder Klappen, an Scheibenwischern, Schiebedächern etc. können auf diese Weise im Sinn eines Funktionseinbaus am Cubing-Aufbau vorgenommen werden. Derartige Aussparungen bieten sich zudem an, da die flächigen Abschnitte an den Referenzbauteilen wegen der Materialeigenschaften des verwendeten Leichtmetalls oftmals nicht in der Materialstärke des Blechs der Rohkarosserie nachgebildet werden können.

Alternativ kann die Wandstärke großflächiger Bauteile der äußeren Struktur in flächigen Bereichen vergrößert werden (Anspruch 12), entweder großflächig oder durch rahmenartige Verrippungen. Die Vergrößerung der Wandstärke ist in den Bereichen unkritisch, in die keine weiteren Anbauteile oder Funktionsbauteile eingebracht werden. Dies ist vor allem in solchen Bereichen der Fall, die mit Schallschutzmatten hinterlegt sind.

Neben der Position der erfindungsgemäßen Vorrichtung in Fahrzeugnetzlage kann die Vorrichtung auch mit Rädern versehen werden (Anspruch 13). Hierdurch wird ein einfacher Transport der Vorrichtung erreicht sowie zusätzlich die Möglichkeit eröffnet, das nachgebildete Fahrzeug in seinem Erscheinungsbild komplett mit den serienmäßigen Rädern zu begutachten.

Bei der erfindungsgemäßen Lösung der Aufgabe nach Anspruch 14 liegt der Schwerpunkt auf der maßgetreuen Nachbildung des Unterbodens der Fahrzeugkarosserie, um Untersuchungen dieses Unterflurbereiches hinsichtlich des Einbauraumes, der Funktion und des Zusammenwirkens verschiedener Bauteile vornehmen zu können. Beispielhaft sind als Bauteile und Baugruppen genannt: Antriebsaggregat, Abgasstrang, Antriebsstrang mit Getriebe, Ausrüstungsgegenstände im Motorraum, Fahrwerk, Unterbodenverkleidung, Radhausabdeckungen, Steinschlagschutzabdeckungen, Leitungen und Kanäle aller Art, Luftführungen für die Bremsanlage etc.

Die Vorrichtung ist dabei an der Unterseite einer schwenkbaren Grundplatte angeordnet. Durch Einbringung in ein Gehänge kann die Vorrichtung entsprechend dem Montageablauf bei der Serienfertigung des Fahrzeuges in eine Lage schräg aufwärts oder abwärts gerichtet gebracht werden, so daß die Montierbarkeit der einzelnen Bauteile an der Unterseite des Fahrzeugs in realistischer Weise untersucht werden kann. Die Vorrichtung kann wie die entsprechende Rohkarosserie an einem Montagegehänge durch die Produktion durchgeschleust werden, um die Montage aller oben genannten Umfänge unter realistischen Bedingungen zu erproben.

Befestigungseinrichtungen für fahrzeugunterseitige Anbauteile sind bei einer Vorrichtung gemäß Anspruch 14 entsprechend den serienmäßigen Befestigungspunkten am Unterboden des Fahrzeuges vorgesehen. Auch hier können alle gängigen Verbindungstechniken entsprechend oder abweichend von den Befestigungsmodalitäten des serienmäßig hergestellten Fahrzeuges angewandt werden.

Mit der erfindungsgemäßen Vorrichtung steht zeitlich vor der ersten Rohkarosserie bereits ein Prüfaufbau für Cubingzwecke ("Prüfcubing") zur Verfügung, so daß parallel zur Innenausstattung der Rohkarosserie bereits am Cubing-Aufbau Einbauversuche vorgenommen werden können. Die erfindungsgemäße Vorrichtung ersetzt somit eine Vielzahl aufwendig herzustellender und entsprechend teuerer Prototypenkarosserien aus Stahlblech, die bei konventioneller Vorgehensweise im Musterbau zu Montageüberprüfungen erforderlich sind. Auch können erfindungsgemäße Vorrichtungen oder Teilbereiche erfindungsgemäßer Vorrichtungen an Lieferanten des Fahrzeugherstellers übergeben werden, so daß bei Fahrzeughersteller und Lieferant gleichermaßen eine einheitliche Abstimmung der Bauteile an maßgenauen Referenzmodellen erfolgt. Insbesondere können erfindungsgemäße Vorrichtungen für Unterbaugruppen, speziell bei Lieferanten des Fahrzeugherstellers, genutzt werden, z. B. für den Innenbereich (Cockpits, Türverkleidungen, Gepäckraumumfänge, Dachinnenverkleidungen, Säulen etc.) oder im Außenhautbereich (Stoßfängersysteme, Schwellerabdeckungen, Leuchten, Scheinwerfer etc.).

Mögliche Ausführungsbeispiele der Erfindung sind in der Zeichnung dargestellt und nachfolgend näher erläutert. Es zeigt:
- Figur 1: eine erfindungsgemäße Vorrichtung in perspektivischer Seitenansicht,
- Figur 2: eine Explosionsdarstellung mit den einzelnen Komponenten der Vorrichtung gemäß Figur 1,
- Figur 3: eine Vorrichtung zur Nachbildung des Bodenbereiches eines Kraftfahrzeuges in auseinandergezogener Darstellung,
- Figur 4: die Vorrichtung gemäß Figur 3 in Seiten-, Unter- und Vorderansicht,
- Figur 5: einen Schnitt durch die Vorrichtung gemäß Figur 1 im Bereich der Tür,
- Figur 6: eine Schnittdarstellung durch den Bereich einer Säule eines serienmäßig hergestellten Fahrzeugs, mit einem serienmäßig hergestellten Innenverkleidungsteil,
- Figur 7: eine Schnittdarstellung eines Referenzbauteils, das der Säule aus Figur 6 entspricht, mit einem serienmäßig hergestellten Innenverkleidungsteil und
- Figur 8: eine der Figur 7 entsprechende Darstellung, mit einem Musterteil anstelle des serienmäßig hergestellten Innenverkleidungsbauteils.

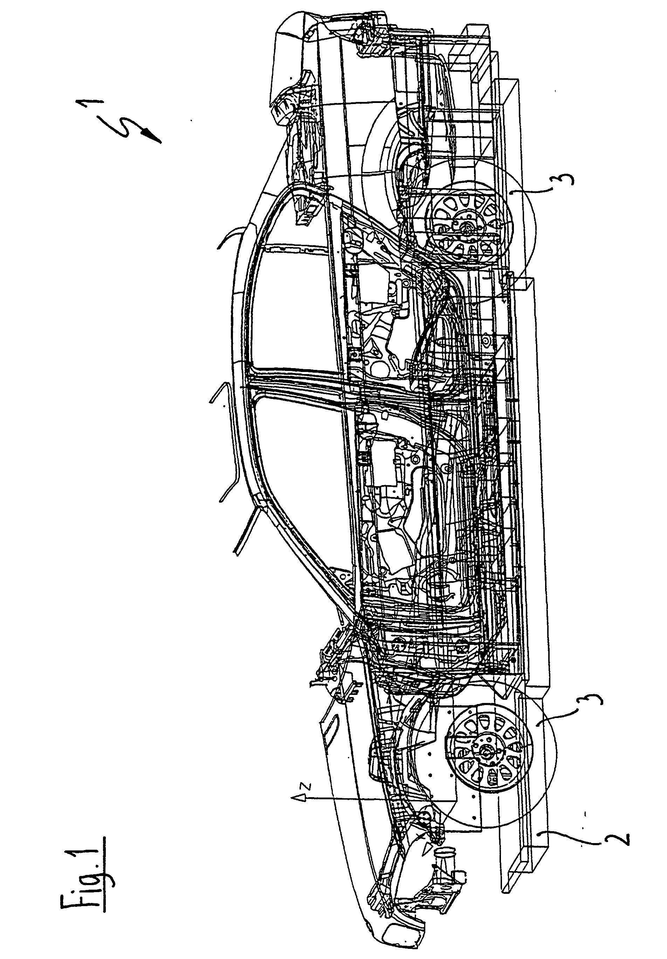

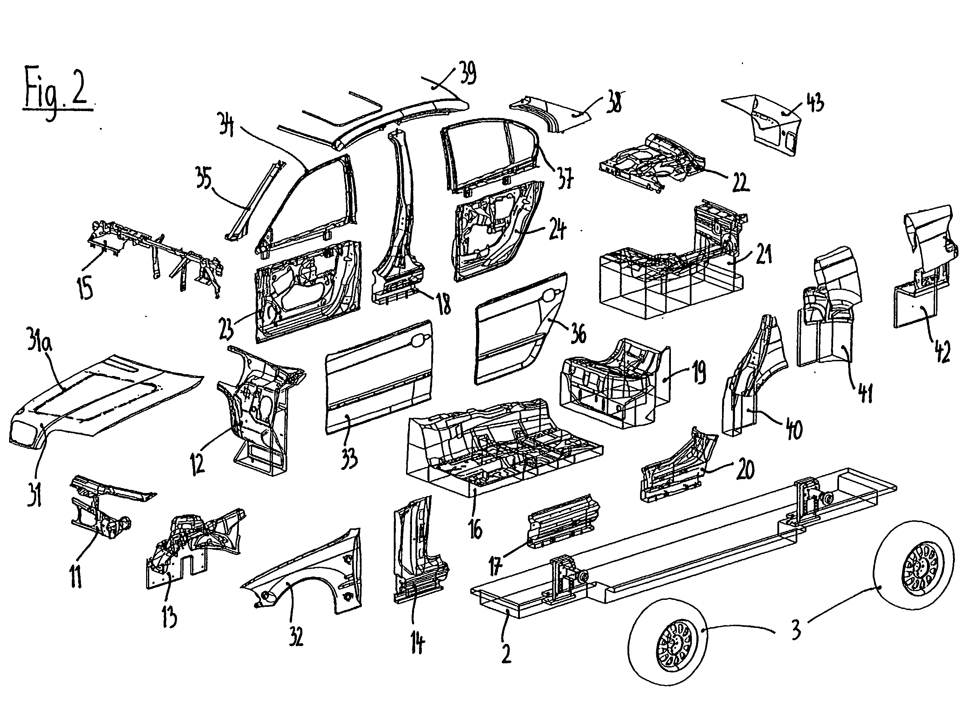

Die Figuren 1 und 2 stellen die linke Hälfte einer in ihrer Gesamtheit mit 1 bezeichneten Vorrichtung zur Nachbildung einer Fahrzeugkarosserie dar. Die Vorrichtung 1 stellt die gesamte Außenhaut des Fahrzeuges mit Ausnahme des Unterbodens sowie große Bereiche des Inneren der Rohkarosserie mit hoher Maßgenauigkeit dar. Die Vorrichtung 1 ist auf einer Grundplatte 2 aufgebaut, wobei zusätzlich serienmäßige Fahrzeugräder 3 an die Vorrichtung 1 montiert sind.

Die Vorrichtung 1 setzt sich im dargestellten Beispiel aus insgesamt 98 einzelnen Komponenten zusammen und ist als freitragendes Abbild des Kraftfahrzeuges ausgebildet. Die gesamte Vorrichtung 1 hat ein Gewicht von ca. 2,5 t. Die Komponenten der linken Fahrzeughälfte sind in Figur 2 explosionsartig dargestellt, wobei in der Darstellung auch Baugruppen enthalten sind, die sich aus mehreren Einzelkomponenten zusammensetzen. Die einzelnen Komponenten sind mit einer Genauigkeit von ± 0,2 mm gefertigt und bestehen bevorzugt aus Aluminiumlegierungen (Walz- oder Gußmaterial), beispielsweise aus AlMg4,5Mn. Ein weiteres Beispiel für ein Ausgangsmaterial für die Komponenten der Vorrichtung 1 ist Aluminiumguß aus Unifond90 (G-AlZn10Si8Mg) ohne Schrottanteil, lunkerfrei gegossen und sandgestrahlt.

Die Vorrichtung 1 unterteilt sich im wesentlichen in eine innere sowie eine äußere Struktur.

Die innere Struktur der Vorrichtung 1 besteht aus folgenden Baugruppen und Einzelkomponenten: Vorderwand 11 (vier Komponenten), Stirnwand 12 (drei Komponenten), vorderes Radhaus 13, Unterteil der A-Säule 14, Tragrohr 15, vorderes Bodenblech 16 (fünfzehn Komponenten), vorderer Schweller 17, B-Säule 18, hinteres Bodenblech 19 (neun Komponenten), hinterer Schweller 20, Gepäckraum 21 (zehn Komponenten) und obere Trennwand 22. Daneben sind an diese feststehende Struktur als weitere Bestandteile der tragenden inneren Struktur ein vorderes sowie ein hinteres Türinnenblech 23 bzw. 24 schwenkbar angebunden.

Die äußere Struktur der Vorrichtung 1 wird von Referenzteilen gebildet, die die Außenhautbauteile nachbilden. Im einzelnen sind dies: Frontklappe 31, vordere Seitenwand 32, vordere Türaußenhaut 33, vorderer Fensterrahmen 34, A-Säule 35, hintere Türaußenhaut 36, hinterer Fensterrahmen 37, C-Säule 38, Dach 39, hinterer Seitenrahmen mit vorderem, mittlerem und hinterem Abschnitt (Bezugszahlen 40, 41 bzw. 42) und Heckklappe 43. Die B-Säule 18 kann aufgrund der außenliegenden Sichtfläche in ihrem oberen Abschnitt ohne weiteres auch als Komponente der äußeren Struktur eingestuft werden.

Während bei einigen Komponenten, wie beispielsweise den Türen, eine Trennung zwischen innerer und äußerer Struktur vorliegt, sind bei anderen Komponenten wie beispielsweise der B-Säule 18, der Frontklappe 31, den Fensterrahmen 34 und 37, der A-Säule 35, dem Dach 39, dem hinteren Seitenrahmen 40 bis 42 und der Heckklappe 43 diese beiden Strukturen zu einer einzigen Struktur zusammengeführt.

Erfindungswesentlich ist, daß sowohl die äußere und innere Kontur der Außenhautbauteile als auch die Kontur der inneren Struktur originalgetreu ausgeführt sind. Damit entstehen beispielsweise zwischen den Türinnenblechen 23 und 24 sowie der Türaußenhaut 33 bzw. 36 Freiräume, an denen Einbauversuche von Bauteilen, wie beispielsweise einer Seitenscheibe, eines Fensterhebers etc. durchgeführt werden können. Auch Freiräume im Schweller 17 bzw. 20 unterhalb einer nicht dargestellten Schwellerverkleidung, im Bereich der Stirnwand 12, im Bereich des Bodenblechs 16 bzw. 19 oder des Gepäckraums 21 können für den seriengemäßen Einbau von Bauteilen, wie beispielsweise Steuergeräten, Leitungen etc. verwendet werden.

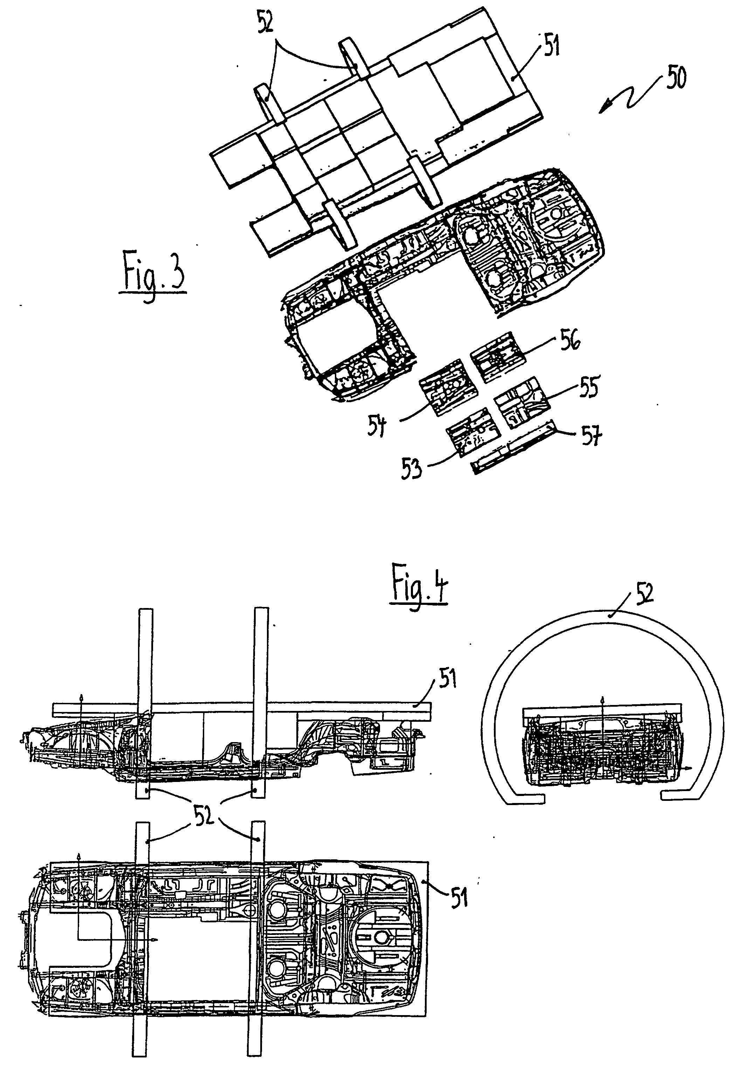

Die Figuren 3 und 4 zeigen eine in ihrer Gesamtheit mit 50 bezeichnete Vorrichtung, die den Bereich des Unterbodens einer Fahrzeugkarosserie nachbildet. Die Vorrichtung 50 ist an eine Grundplatte 51 mit einem Gehänge aus zwei bogenförmigen Aufhängevorrichtungen 52 angebunden. Die Vorrichtung 50 besteht ebenso wie die in den Figuren 1 und 2 dargestellte Vorrichtung 1 aus einer Vielzahl von Komponenten, von denen in Figur 3 lediglich vier Komponenten 53 bis 56 der Bodengruppe sowie ein Schwellerbauteil 57 separat dargestellt sind.

Gemäß Figur 4 befindet sich bei der Vorrichtung 50 (dargestellt ohne die Komponenten 53 bis 56) die Grundplatte 51 oberhalb des nachgebildeten Fahrzeugabschnittes. Durch Verschwenkung der Grundplatte um 180° liegt der nachgebildete Bereich des Unterbodens obenauf und ist für Einbauversuche und Begutachtungen gut zugänglich. Daneben kann die Grundplatte 51 selbstverständlich in beliebige Zwischenstellungen verschwenkt werden, um die Situation an einem Montagegehänge in der Endmontage eines Kraftfahrzeuges zu simulieren.

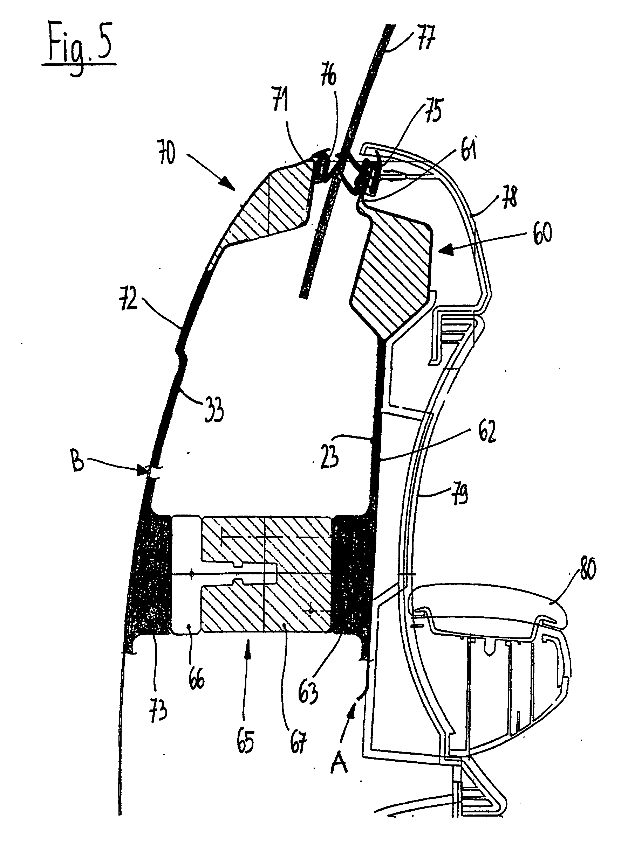

Figur 5 zeigt die aus den Komponenten 23 und 33 zusammengesetzte Tür der Vorrichtung 1 im Querschnitt. Die Komponente 23 besteht in ihrem oberen Bereich 60 aus einem Vollmaterial, das oberseitig in einem Flansch 61 endet. Nach unten setzt sich das nachgebildete Türinnenblech 23 in einer dünnwandigen Struktur 62 fort, die jedoch gegenüber der Blechstärke des serienmäßigen Rohbauteils, wie sie im Bereich A dargestellt ist, aufgrund der erforderlichen Steifigkeit und Festigkeit eine entsprechend vergrößerte Wandstärke aufweist. Im Mittelbereich des Türinnenbleches 23 ist an die Struktur 62 eine Aufnahme 63 einstückig angeformt, die ein in seiner Gesamtheit mit 65 bezeichnetes Verbindungselement aufnimmt. Das Verbindungselement 65 besteht aus einer Aufnahme 66 sowie einem Adapter 67, wie an sich bereits aus der DE 196 20 465 A1 bekannt.

Die Komponente 33 (Türaußenhaut) besteht in ihrem oberen Bereich 70 ebenfalls aus einem Vollmaterial mit angeformtem Flansch 71. Nach unten hin setzt sich das nachgebildete Türaußenblech 33 in einem flächigen Abschnitt 72 fort, der ebenso wie der Bereich 62 des Türinnenbleches 23 versteift ist. Zum Vergleich ist im Bereich B die Originalblechstärke dargestellt. Eine Aufnahme 73 bildet das äußere Gegenstück für die Anbindung des Verbindungselementes 65.

Auf die Flansche 61 und 71 sind Dichtprofile 75 und 76 aufgesteckt, zwischen denen eine versenkbare Seitenscheibe 77 läuft. An der Innenseite des nachgebildeten Türinnenbleches 23 sind. Ausstattungsteile 78 bis 80 (Innenverkleidungen, Armauflage) angeordnet.

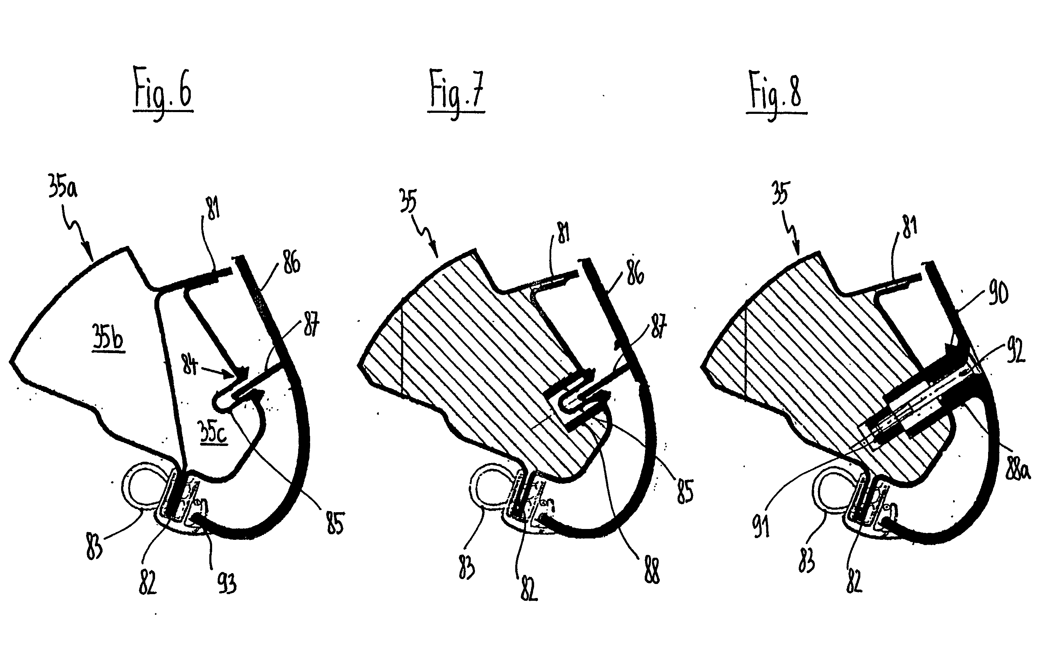

Anhand der Figuren 6 bis 8 ist die Befestigungstechnik für Verkleidungsteile oder Musterteile an der erfindungsgemäßen Vorrichtung 1 näher dargestellt.

Figur 6 zeigt eine A-Säule 35a aus Stahlblech im Querschnitt, die in zwei Kammern 35b und 35c unterteilt ist. Die A-Säule 35a weist einen ersten sowie einen zweiten Flansch 81 bzw. 82 auf, die der Anlage einer nicht dargestellten Windschutzscheibe bzw. der Aufnahme eines Dichtprofils 83 dienen. Ferner ist in einer Öffnung 84 der A-Säule 35a ein Einsteckbefestiger 85 eingesetzt, in den eine Blende 86 mittels eines Aufnahmestiftes 87 eingesetzt ist. Der türseitige Abschnitt 93 der Blende 86 ist im Dichtprofil 83 fixiert.

Demgegenüber zeigt Figur 7 die A-Säule 35 der Vorrichtung 1, die im Unterschied zum Blechbauteil 35a der Figur 6 als Vollmaterial ausgeführt ist. Die Außenkontur der A-Säule 35 entspricht jedoch exakt der Außenkontur der A-Säule 35a in Blechbauweise. Auch die Flansche 81 und 82 sind entsprechend dem Serienteil mit hoher Maßgenauigkeit ausgeführt, so daß eine absolut konstruktionsgetreue Anlagefläche für die Windschutzscheibe vorliegt bzw. das Dichtprofil 83 gleichwirkend zur A-Säule 35a aufgesteckt werden kann. Zur Befestigung der Blende 86, die in Figur 7 als seriennahes Musterteil oder als serienfallendes Bauteil ausgeführt ist, ist in die A-Säule 35 eine Paßbuchse 88 eingesetzt. Diese Paßbuchse 88 trägt in ihrem Inneren einen serienmäßigen Einsteckbefestiger 85, der damit in analoger Weise den Führungsstift 87 der Blende 86 aufnehmen kann. Alternativ zur Paßbuchse 88 kann auch eine Schraubbuchse eingesetzt werden, mit Vorteilen hinsichtlich der Austauschbarkeit und der Korrosionsanfälligkeit.

In Figur 8 ist die Befestigung eines Musterteils 90 dargestellt, das aus einem metallischen Werkstoff besteht. Zur Anbindung des Musterteils 90 ist in die nachgebildete A-Säule 35 eine einstückig an das Musterteil 90 angeformte Paßbuchse 88a eingesetzt, die das Musterteil 90 exakt zur A-Säule positioniert. An die Paßbuchse 88b schließt sich konzentrisch eine Gewindebuchse 91 an, die ein Innengewinde für eine Befestigungsschraube 92 aufweist, über die das Musterteil 90 an der A-Säule 35 befestigt wird.

Musterteile gemäß Figur 8 weisen aufgrund der verwendeten Materialien eine eingeschränkte Formbeständigkeit und Maßhaltigkeit über der Zeit auf. Bei Einsatz eines derartigen Musterteils als Referenzteil während des gesamten Produktionszyklus eines Fahrzeugtyps wird eine über den Serienstand hinausgehende zusätzliche Befestigungspunkte an die Vorrichtung 1 vorgeschlagen (nicht dargestellt). Ferner können derartige Musterteile in gleicher Weise wie die Komponenten der Vorrichtungen 1 oder 50 aus Leichtmetall hergestellt werden, um unabhängig von der Einsatzdauer eine gleichbleibende Formbeständigkeit und Maßhaltigkeit zu erreichen.

Abweichend zur Darstellung der Figuren 1 bis 8 können insbesondere die Außenhautbauteile (Türen, Front- und Heckklappe, Dach etc.) mit fensterartigen Ausschnitten versehen werden. Ein derartiger Ausschnitt 31a ist beispielhaft in die Frontklappe 31 der Figur 2 gestrichelt eingezeichnet.

Durch die Ausbildung eines fensterartigen Ausschnittes ergibt sich eine Reihe von Vorteilen: Bei einem großflächigen Außenhautbauteil muß der Mittenbereich der Komponente nicht mit gegenüber dem entsprechenden Blechbauteil vergrößerter Wandstärke oder mit zusätzlichen Versteifungen ausgeführt werden. Bei einer derartig ausgesparten Komponente wird die Bearbeitungszeit und der Bearbeitungsaufwand durch spanende Bearbeitung reduziert, mit der Folge geringerer Herstellkosten. Durch den Ausschnitt wird eine Gewichtsreduzierung erzielt, mit Vorteilen im Handling bei der Montage und der Demontage der Komponente. Dicht- und Schließsysteme können realistischer geprüft und beurteilt werden, da mit dem Ausschnitt eine Gewichtsreduzierung der betreffenden Komponente erzielt wird, wodurch sich Gewichtsverhältnisse einstellen, die denen einer serienmäßig hergestellten Karosserie etwa entsprechen. So kann bei einer durch wenigstens eine Aussparung gewichtsreduzierten Front- oder Heckklappe eine objektive Beurteilung der Schließkräfte mit einem serienmäßigen Schließmechanismus erfolgen, unter Verwendung serienmäßig hergestellter Scharniere. Außerdem wird die Klappe durch serienmäßige Gasfedern in ihrer geöffneten Position gehalten. Ferner ist durch den fensterartigen Ausschnitt eine Sicht- und Funktionsprüfung der im Inneren der Komponente angeordneten Bauteile möglich, beispielsweise bei versenkbaren Scheiben oder bei Schließsystemen. Damit können bereits am Cubing-Aufbau Funktionsuntersuchungen unter seriennahen Bedingungen durchgeführt werden.

Sind Aussparungen nicht erwünscht oder nicht erforderlich, können flächige Bereiche von Außenhautbauteilen auch in einer nahezu originalgetreuen Materialstärke von 2 mm gefräst werden, wodurch sowohl die Außenhaut als auch der innenseitig zur Verfügung stehende Bauraum darstellbar ist. Hiermit können Flächen von ca. 300 x 300 mm² dargestellt werden, die allerdings einen umlaufenden Rahmen aufweisen müssen, um eine entsprechende Stabilität bereitzustellen, vor allem an den Stoßstellen zwischen zwei Komponenten.

Die einzelnen Komponenten der Vorrichtungen 1 bzw. 50 sind so ausgelegt, daß sie einen in sich selbst tragenden Aufbau bilden, mit Wandstärken, die eine ausreichende Steifigkeit gewährleisten. Die innere Struktur sowie größere Abschnitte der äußeren Struktur sind so unterteilt, daß zwischen den Komponenten bevorzugt ebene Trennflächen entstehen, um den Zusammenbau und den Austausch einzelner Komponenten zu erleichtern. Durch die begrenzte Größe und das vergleichsweise geringe Gewicht vereinfacht sich gegenüber groß dimensionierten Komponenten die Herstellung sowie die nachträgliche Bearbeitung bei Änderungen einzelner Komponenten. Außerdem wird ein verbessertes Handling beim Aufbau der Vorrichtung bzw. beim Austausch einer Komponente erreicht. Auch können bei maßlichen oder geometrischen Änderungen eines Karosserieabschnittes einzelne Komponenten mit geringem Aufwand gegen neue Komponenten ausgetauscht werden. Die einzelnen Komponenten sind an ihren Begrenzungs- oder Teilungsflächen über eingesetzte Paßbuchsen und Paßstifte miteinander verstiftet und anschließend zur Sicherung der Verbindung verschraubt, wobei die Verschraubungen bevorzugt von außen zugänglich sind, so daß die jeweiligen Außenhautbauteile (z. B. B-Säule, Dach, Schweller, Seitenrahmen etc.) ohne Demontage benachbarter Komponenten gelöst bzw. fixiert werden können. Soweit technisch machbar, sind die Verbindungselemente (Stifte, Schrauben) in einem festgelegten Raster, beispielsweise in einem 100-mm-Raster, vorzusehen. In gleicher Weise werden die Komponenten der Vorrichtung 1 bzw. 50 mit der Grundplatte 2 bzw. 51 verbunden. Die Formteilung ist darüber hinaus so zu wählen, daß verschiedene Karosserievarianten des Fahrzeugs durch Austausch möglichst weniger Komponenten dargestellt werden können.

Anstelle eines kompletten Ersatzes einer abzuändernden Komponente bietet sich bei geringfügigen Änderungen die Verwendung eines Einsatzes an, der nach entsprechendem Materialabtrag an der Komponente durch Verschraubung, Verklebung, Aufschrumpfung etc. befestigt wird. Zur nachträglichen galvanischen Behandlung ist eine leitende, materialschlüssige Verbindung erforderlich. Daneben sind Korrekturen mit "Spachtelmassen" grundsätzlich ebenfalls möglich.

Während die in Blech gefertigten Außenhautbauteile (Front-, Heckklappe, Dach, Seitenrahmen etc.) unterseitig Versteifungsprofile aus Blech aufweisen, sind diese Versteifungsprofile bei den Komponenten der Vorrichtungen 1 bzw. 50 nicht als separate Bauteile dargestellt, sondern einstückig mit der Komponente selbst und in der Regel als Vollmaterial ausgeführt. Abweichend hiervon können solche Außenhautbauteile auch zwei- oder mehrteilig ausgeführt werden.

## Patentansprüche

1. Vorrichtung (1, 50) zur Nachbildung zumindest eines Teilbereiches einer Fahrzeugkarosserie zum Zweck der Abstimmung von Fahrzeugteilen, mit einer tragenden inneren Struktur aus einem metallischen Werkstoff, wobei
eine innere Struktur von Komponenten (11 bis 22) gebildet wird, die zumindest in Teilbereichen die Blechstruktur der Fahrzeugkarosserie unmittelbar nachbilden, wobei an der inneren Struktur Referenzteile (31 bis 42) von Außenhautbauteilen der Fahrzeugkarosserie angeordnet sind, wobei die Referenzteile (31 bis 42) aus einem metallischen Werkstoff bestehen und zumindest teilweise von der inneren Struktur abnehmbar sind.

2. Vorrichtung nach Anspruch 1, wobei
an der Vorrichtung wenigstens ein Referenzteil eines Ausstattungsteils des Fahrzeugs vorgesehen ist, das aus einem metallischen Werkstoff besteht und von der Vorrichtung abnehmbar ist.

3. Vorrichtung nach Anspruch 1 und/oder 2, wobei
die Referenzteile (31 bis 42) der Außenhautbauteile und/oder das Referenzteil des Ausstattungsteils aus einer Aluminiumlegierung bestehen.

4. Vorrichtung nach einem der vorgenannten Ansprüche, wobei
die Referenzteile (31 bis 42) der Außenhautbauteile ohne Demontage benachbarter Komponenten (11 bis 42) einzeln abnehmbar sind.

5. Vorrichtung nach einem der vorgenannten Ansprüche, wobei
die Innenseite der Referenzteile der Außenhautbauteile (33) und/oder die innere Struktur (23) zumindest abschnittsweise eine Geometrie aufweist, die der Geometrie des betreffenden Abschnitts der serienmäßig hergestellten Fahrzeugkarosserie entspricht.

6. Vorrichtung nach einem der vorgenannten Ansprüche, wobei
an wenigstens einer Komponente (23, 33; 35) der Vorrichtung (1) eine Anlagefläche (81) oder ein Flansch (61, 71; 82) für ein Ausstattungsteil (75, 76; 83) vorgesehen ist.

7. Vorrichtung nach einem der vorgenannten Ansprüche, wobei
an einem dünnwandigen Randbereich einer Komponente der Vorrichtung ein Einsatzteil hoher Festigkeit und/oder Steifigkeit vorgesehen ist.

8. Vorrichtung nach einem der vorgenannten Ansprüche, wobei
an wenigstens einer Komponente (35) der Vorrichtung (1) eine Befestigungseinrichtung (85, 88, 91) für ein Bauteil (86) des Fahrzeugs vorgesehen ist, die mit einem serienmäßigen Befestigungspunkt (87) des Bauteils (86) zusammenwirkt.

9. Vorrichtung nach Anspruch 8, wobei
die Befestigungseinrichtung einen Einsatz in Form einer Paßbuchse (88, 88a) einer Gewindebuchse (91) oder dergleichen aufweist.

10. Vorrichtung nach Anspruch 8 und/oder 9, wobei
die Befestigungseinrichtung (85; 88, 91) zur Schraub- und/oder Clipsbefestigung eines Bauteils (86; 86a) ausgebildet ist.

11. Vorrichtung nach einem der vorgenannten Ansprüche, wobei
im Bereich der flächigen Erstreckung einer Komponente (31) der Vorrichtung (1) eine fensterförmige Aussparung (31a) vorgesehen ist.

12. Vorrichtung nach einem der vorgenannten Ansprüche, wobei
im Bereich der flächigen Erstreckung (62 bzw. 72) einer Komponente (23, 33) der Vorrichtung (1) diese zumindest teilweise eine gegenüber einem serienmäßig hergestellten Karosseriebauteil größere Wandstärke aufweist.

13. Vorrichtung nach einem der vorgenannten Ansprüche, wobei
die Vorrichtung mit Rädern (3) versehen ist.

14. Vorrichtung zur Nachbildung zumindest eines Teilbereiches einer Fahrzeugkarosserie zum Zweck der Abstimmung von Fahrzeugteilen, wobei
sich die Vorrichtung (50) aus einer Mehrzahl von Komponenten (53 bis 57) zusammensetzt, die den Bereich des Unterbodens einer Fahrzeugkarosserie maßgetreu nachbilden, mit den sich anschließenden Front-, Heck- und/oder Schwellerbereichen der Fahrzeugkarosserie, wobei die Vorrichtung (50) an der Unterseite einer schwenkbaren Grundplatte (51) angeordnet ist und wenigstens eine Befestigungseinrichtung für ein fahrzeugunterseitiges Bauteil aufweist.

## Claims

1. A device (1, 50) for simulating at least a partial region of a vehicle body for the purpose of adjustment of vehicle parts, comprising a load-bearing inner structure formed of a metal material, wherein an inner structure of components (11 to 22) is formed and directly simulates the sheet-metal structure of the vehicle body, at least in partial regions, wherein reference parts (31 to 42) of outer skin components of the body are disposed on the inner structure, wherein the reference parts (31 to 42) are made of a metal material and are at least partly removable from the inner structure.

2. A device according to claim 1, wherein at least one reference part of a fixture of the vehicle is provided on the device and is formed of a metal material and is removable from the device.

3. A device according to claim 1 and/or 2, wherein the reference parts (31 to 42) of the outer skin components and/or the reference part of the fixture are formed of an aluminium alloy.

4. A device according to any of the preceding claims, wherein the reference parts (31 to 42) of the skin components can be individually removed without dismantling neighbouring components (11 to 42).

5. A device according to any of the preceding claims, wherein the inside of the reference parts of the skin components (33) and/or the inner structure (23), at least in parts, has a shape which corresponds to the shape of the relevant portion of the series-produced vehicle body.

6. A device according to any of the preceding claims, wherein a contact surface (81) or a flange (61, 71; 82) for a fixture (75, 76; 83) is provided on at least one component (23, 33; 35) of the device (1).

7. A device according to any of the preceding claims, wherein a high-strength and/or rigid insert is provided on a thin-walled edge region of a component.

8. A device according to any of the preceding claims, wherein a means (85, 88, 91) for fastening a component (86) of the vehicle is provided on at least one component (35) of the device (1) and co-operates with a series-production place (87) for fastening the component (86).

9. A device according to claim 8, wherein the fastening device has an insert in the form of a locating bush (88, 88a), a threaded bush (91) or the like.

10. A device according to claim 8 and/or 9, wherein the fastening device (85; 88, 91) is designed for screwing and/or clip-fastening a component (86; 86a).

11. A device according to any of the preceding claims, wherein a window-like recess (31a) is provided in a flat or thin extended part of a component (31) of the device (1).

12. A device according to any of the preceding claims, wherein in the region of the flat extension (62 or 72) of a component (23, 33) of the device (1), the device has a wall thickness which is greater, at least at places, than that of a series-produced body part.

13. A device according to any of the preceding claims, wherein the device is provided with wheels (3).

14. A device for simulating at least one part-region of a vehicle body for the purpose of adjustment of vehicle parts, wherein the device (50) is formed of a number of components (53 to 57) which simulate the underbody region of a vehicle true to size, with the adjoining front, rear and/or sillboard regions of the vehicle body, wherein the device (50) is disposed on the underside of a pivotable baseplate (51) and has at least one device for fastening a component to the underside of the vehicle.

## Revendications

1. Dispositif pour la reproduction d'au moins une partie d'une carrosserie de véhicule en vue de l'harmonisation de pièces de véhicule, avec une structure intérieure portante en un matériau métallique, dans lequel est formée une structure intérieure de composants (11 à 22) qui reproduisent directement, au moins dans des zones partielles, la structure en tôle de la carrosserie, des pièces de référence (31 à 42) de composants de l'enveloppe extérieure de la carrosserie étant disposées sur la structure intérieure, les pièces de référence (31 à 42) étant constituées d'un matériau métallique et étant amovibles au moins en partie de la structure intérieure.

2. Dispositif selon la revendication 1, dans lequel il est prévu sur le dispositif au moins une pièce de référence d'une pièce d'équipement du véhicule constituée d'un matériau métallique et amovible dans le dispositif.

3. Dispositif selon la revendication 1 et/ou 2, dans lequel les pièces de référence (31 à 42) des composants de l'enveloppe extérieure et/ou la pièce de référence de la pièce d'équipement sont constituées d'un alliage d'aluminium.

4. Dispositif selon l'une quelconque des revendications précédentes, dans lequel les pièces de référence (31 à 42) des composants de l'enveloppe extérieure sont amovibles individuellement sans démontage des composants adjacents (11 à 42).

5. Dispositif selon l'une quelconque des revendications précédentes, dans lequel la face intérieure des pièces de référence des composants de l'enveloppe extérieure (33) et/ou la structure intérieure (23) présentent au moins en parties une géométrie qui correspond à la géométrie de la partie correspondante de la carrosserie de véhicule fabriquée en série.

6. Dispositif selon l'une quelconque des revendications précédentes, dans lequel il est prévu, sur au moins un composant (22, 33 ; 35) du dispositif (1) une surface d'appui (81) ou une bride (61, 71 ; 82) pour une pièce d'équipement (75, 76 ; 83).

7. Dispositif selon l'une quelconque des revendications précédentes, dans lequel il est prévu, sur une zone de bord à paroi mince d'un composant du dispositif une pièce de résistance et/ou de rigidité élevées.

8. Dispositif selon l'une quelconque des revendications précédentes, dans lequel il est prévu, sur au moins un composant (35) du dispositif (1) un système de fixation (85, 88, 91) pour un composant (86) du véhicule, qui coopère avec un point de fixation (87) de série du composant (86).

9. Dispositif selon la revendication 8, dans lequel le système de fixation présente un insert sous forme d'une douille d'adaptation (88, 88a), d'une douille filetée (91) ou autres similaires.

10. Dispositif selon la revendication 8 et/ou 9, dans lequel le système de fixation (85 ; 88, 91) est conçu pour une fixation par vis et/ou attache d'un composant (86 ; 86a).

11. Dispositif selon l'une quelconque des revendications précédentes, dans lequel il est prévu, dans la zone de l'étendue plane d'un composant (31) du dispositif (1), un évidement (31a) en forme de fenêtre.

12. Dispositif selon l'une quelconque des revendications précédentes, dans lequel, dans la zone de l'étendue plane (62 et 72) d'un composant (23, 33) du dispositif (1), celui-ci présente au moins en partie une épaisseur de paroi accrue par rapport à un composant de la carrosserie fabriqué en série.

13. Dispositif selon l'une quelconque des revendications précédentes, dans lequel le dispositif est muni de roues (3).

14. Dispositif pour la reproduction d'au moins une partie d'une carrosserie de véhicule en vue de l'harmonisation de pièces de véhicule, dans lequel le dispositif (50) est composé d'une pluralité de composants (53 à 57) qui reproduisent la zone du soubassement d'une carrosserie de véhicule fidèlement en termes de dimensions, avec les zones de l'avant, de l'arrière et/ou des seuils de la carrosserie de véhicule qui leur font suite, le dispositif (50) étant disposé sur la face inférieure d'une plaque de base (51) pivotante et présentant au moins un système de fixation pour un composant de la face inférieure du véhicule.
